# EUROPÄISCHE PATENTSCHRIFT

(11) **EP 2 978 616 B1**
(45) Veröffentlichungstag und Bekanntmachung des Hinweises auf die Patenterteilung: **14.12.2016**
(21) Anmeldenummer: 14700284.4
(22) Anmeldetag: 10.01.2014
(51) Int. Cl.: B60C 23/04

(54) **REIFENMODUL FÜR FAHRZEUGREIFEN**
TYRE MODULE FOR VEHICLE TYRES
MODULE DE PNEU POUR PNEUS DE VÉHICULE

(30) Priorität: 27.03.2013 DE 102013103135
(43) Veröffentlichungstag der Anmeldung: 03.02.2016
(73) Patentinhaber: Continental Reifen Deutschland GmbH, 30165 Hannover (DE)
(72) Erfinder: LEHMANN, Jörg, 30453 Hannover (DE); SCHER, Andreas, 31303 Burgdorf (DE)
(74) Vertreter: Widjaja, Wira
(86) Internationale Anmeldenummer: PCT/EP2014/050349
(87) Internationale Veröffentlichungsnummer: WO 2014/154368

(56) Entgegenhaltungen:
- US-A1- 2002 174 925
- US-A1- 2003 150 261

## Beschreibung

Die Erfindung betrifft ein Reifenmodul für Fahrzeugreifen.

Reifenmodule werden im Reifen für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde und an welches Fahrzeug der Reifen montiert wurde. Andere Aufgaben können eine Luftdrucküberwachung, eine Temperaturmessung oder die Messung von mechanischen Spannungszuständen im Reifen umfassen. Moderne Reifenmodule umfassen ein Elektronikmodul, in dem Sensorelemente und andere elektronische Bauteile angeordnet sind. Ein Beispiel für ein solches Reifenmodul offenbart die DE 102 43 441 A1.
*Die* US 2003/150261 A1 *und* US 2002/174925 A1 *zeigern weitere bekannte Reifenmodule für Fahrzeugreifen.*

Ein Problem beim Einsatz von Reifenmodulen ist, dass das Reifenmodul im Allgemeinen entweder am Fahrzeugreifen oder aber an der Felge befestigt wird. Die Befestigung bedeutet immer einen zusätzlichen Arbeitsschritt und ist in dem Fall nicht unproblematisch, wenn das Reifenmodul auf der Reifeninnenseite des Fahrzeugreifens befestigt werden soll. Es gibt Ansätze, das Reifenmodul ohne Befestigung im Reifenhohlraum anzuordnen.

Dabei besteht ein Problem darin, dass das Reifenmodul sich in einer undefinierten Position auf der Reifeninnenseite anlegt. Für eine optimale Sende- und Empfangsleistung des Reifenmoduls gibt es jedoch eine bevorzugte Position für die Lage des Reifenmoduls im Reifenhohlraum.

Der Erfindung liegt die Aufgabe zugrunde, ein Reifenmodul für einen Fahrzeugreifen bereitzustellen, bei dem das Reifenmodul eigenständig eine optimale Position auf der Reifeninnenseite annimmt.

Gelöst wird die Aufgabe gemäß Anspruch 1.

Ein Vorteil der Erfindung ist insbesondere darin zu sehen, dass das erfindungsgemäße Reifenmodul auf einfache Weise im Reifenhohlraum des Fahrzeugreifens angeordnet wird. Es ist nunmehr keine aufwendige Montage des Reifenmoduls an der Felge oder auf der Reifeninnenseite des Fahrzeugreifens notwendig; beispielsweise über einen entsprechenden Klebeprozess. Das Reifenmodul wird einfach lose in den Reifenhohlraum des Fahrzeugreifens eingelegt. Anschließend wird der Fahrzeugreifen mit dem Reifenmodul auf der Felge montiert. Der Container des Reifenmoduls bietet einen ausreichenden Schutz für das Elektronikmodul. Außerdem wird durch den Container die Innenseele des Fahrzeugreifens vor Beschädigungen geschützt. Durch die erfindungsgemäße Form des Containers legt sich das Reifenmodul immer in einer aufrechten Position an die Reifeninnenseite des Fahrzeugreifens an. In dieser stabilen Lage des Reifenmoduls ist die im Reifenmodul angeordnete Antenne im allgemeinen in Umfangsrichtung zum Fahrzeugreifen angeordnet. Auf diese Weise wird eine optimale Signalübertragung des Reifenmoduls zu einer außerhalb des Fahrzeugreifens angeordneten Vorrichtung zum Empfangen von Daten gewährleistet. Insbesondere wird eine optimale Signalübertragung über die Seitenwände des Fahrzeugreifens gewährleistet. Durch die flügelförmige Verlängerung des Containers wird gewährleistet, dass sich das Reifenmodul nicht auf der Reifeninnenseite abrollen kann und sich so auf der Reifeninnenseite anordnet, dass die kurze Querachse des Reifenmoduls in Umfangsrichtung des Fahrzeugreifens zeigt. Diese stabile Lage wird ebenfalls durch die flügelförmige Verlängerung des Containers unterstützt.

In einer weiteren vorteilhaften Weiterbildung der Erfindung ist vorgesehen, dass die lange Längsachse mindestens doppelt so lang ist wie die kurze Querachse.
Durch diese Abmessungen wird gewährleistet, dass sich das Reifenmodul optimal auf der Reifeninnenseite ausrichtet, wobei die Antenne in Umfangsrichtung des Fahrzeugreifens weist.

In einer weiteren vorteilhaften Weiterbildung der Erfindung ist vorgesehen, dass die lange Längsachse eine Länge im Bereich zwischen 5 und 9 cm aufweist.
Dadurch besitzt das Reifenmodul auf seiner Unterseite eine stabile Aufstandsfläche.

In einer weiteren vorteilhaften Weiterbildung der Erfindung ist vorgesehen, dass der Container eine lange Längsache mit zwei gegenüberliegenden flügelförmigen Verlängerungen aufweist.
Durch die beiden flügelförmigen Verlängerungen auf beiden Seiten des Reifenmoduls besitzt das Reifenmodul eine insgesamt größere Aufstandsfläche. Dadurch wird die optimale Ausrichtung des Reifenmoduls auf der Reifeninnenseite wesentlich unterstützt.

In einer weiteren vorteilhaften Weiterbildung der Erfindung ist vorgesehen, dass das Reifenmodul auf seiner Oberseite eine bügelförmige Verlängerung aufweist.
Die bügelförmige Verlängerung verhindert ebenfalls ein Abrollen des Reifenmoduls auf der Reifeninnenseite.

In einer weiteren vorteilhaften Weiterbildung der Erfindung ist vorgesehen, dass die bügelförmige Verlängerung auf der Oberseite des Reifenmoduls senkrecht zur langen Längsachse ausgerichtet ist.
Auf diese Weise wird der Vorgang unterstützt, bei dem sich das Reifenmodul optimal auf der Reifeninnenseite ausrichtet.

In einer weiteren vorteilhaften Weiterbildung der Erfindung ist vorgesehen, dass die Höhenabmessung der bügelförmigen Verlängerung ca. 1 bis 3 cm beträgt.
Diese Höhenabmessung ist optimal, um das Abrollen des Reifenmoduls auf der Reifeninnenseite zu unterbinden.

In einer weiteren vorteilhaften Weiterbildung der Erfindung ist vorgesehen, dass die Randbereiche des Containers und/oder der flügelförmigen Verlängerung des Containers abgerundete Formen aufweisen.
Dadurch kippt das Reifenmodul einfacher in seine stabile aufrechte Lage zurück. Außerdem werden durch die abgerundeten Formen des Containers die Innenseele vor Beschädigungen geschützt.

In einer weiteren vorteilhaften Weiterbildung der Erfindung ist vorgesehen, dass der Container aus einem weichen Material besteht, wobei die Materialhärte des Containermaterials kleiner oder in etwa gleich so groß ist wie die Materialhärte der Materiallagen von Reifeninnenseiten.
Dadurch wird gewährleistet, dass die Reifeninnenseite des Fahrzeugreifens nicht durch das Reifenmodul beschädigt wird. Die geringere Materialhärte am Container hat zur Folge, dass ein Gummiabrieb im Wesentlichen am Container erfolgt und nicht an der Reifeninnenseite.

In einer weiteren vorteilhaften Weiterbildung der Erfindung ist vorgesehen, dass der Container aus einem Elastomer- oder einem Silikon-Material besteht.

Beide Materialien stellen sicher, dass die Reifeninnenseite nicht beschädigt wird.

In einer vorteilhaften Weiterbildung der Erfindung ist vorgesehen, dass die Unterseite des Containers eine im Wesentlichen ebene Aufstandsfläche bildet. Die ebene Aufstandsfläche des Containers bewirkt ein festes Aufliegen der Containerunterseite auf der Reifeninnenseite, nachdem das Reifenmodul seine stabile Lage eingenommen hat.

Anhand eines Ausführungsbeispieles soll die Erfindung näher erläutert werden. Es zeigen:
- Fig. 1:: ein Ausführungsbeispiel des Reifenmoduls in der Seitenansicht,
- Fig. 2:: das Reifenmodul in einer Aufsicht.

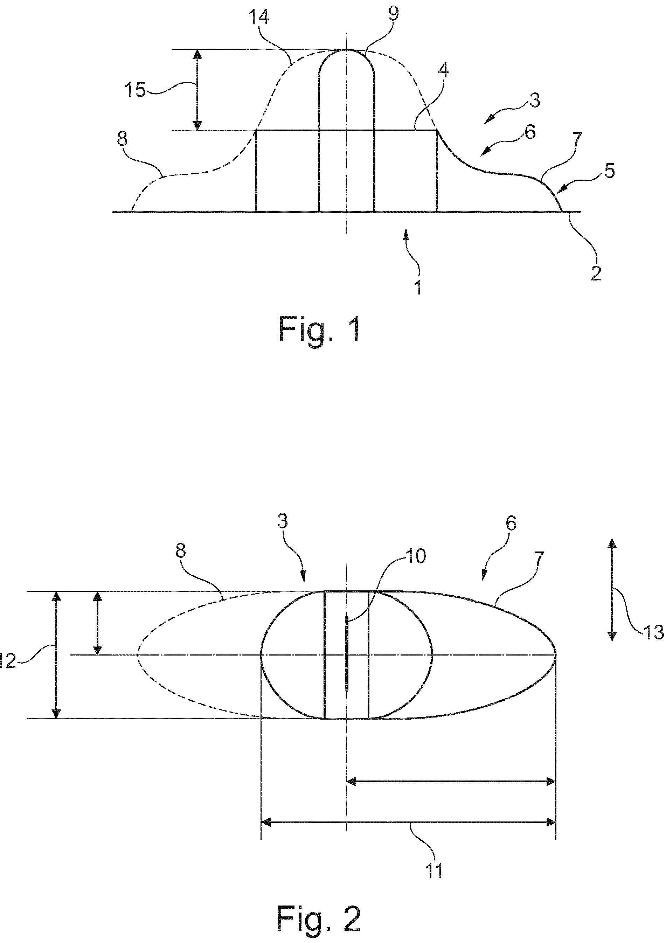

Die Figur 1 zeigt ein Ausführungsbeispiel. Auf der Reifeninnenseite 2 ist z.B. im Reifenzenit das Reifenmodul 3 angeordnet, in dem u.a. Sensoren, ein elektronisches Bauteil mit einem aktiv sendenden Element und einem Speicher angeordnet sind. Im Speicher werden reifenspezifische Daten, z.B. DOT-Nr etc., gespeichert, verarbeitet und an fahrzeuginterne oder -externe Empfänger weitergeleitet. Analog wird mit den erfassten Sensordaten verfahren.

Im Reifenmodul 3 ist ein Elektronikmodul 4 angeordnet, welches mindestens ein Reifendruckmesssystem mit einem Drucksensor umfasst. Der Container 6 besteht aus einem Elastomermaterial, Silikon oder aus einer Vergussmasse.

Fig.1 zeigt eine Querschnittansicht des Reifenmoduls 3 mit der Reifeninnenseite 2. Das Elektronikmodul 4 ist im Wesentlichen zylinderförmig oder ellipsenförmig ausgebildet. Die elektronischen Bauteile sind auf einer Platine angeordnet und ggf in einer Vergussmasse bzw. einem Vergussmaterial des Elektronikmodules 4 eingebettet. Das Reifenmodul 3 ist in seiner stabilen, aufrechten Lage dargestellt. Das Reifenmodul verhält sich im Wesentlichen wie ein Stehaufmännchen, welches immer von alleine in diese stabile Lage zurückkehrt. Das gilt auch für den Fall, dass der Fahrzeugreifen in Rotation versetzt wird. Die Unterseite 1 des Containers 6 ist in Form einer ebenen Aufstandsfläche ausgebildet. Die Randbereiche 5 der Unterseite des Containers 6 sind abgerundet.

Der Container 6, in den das Elektronikmodul 4 eingebettet ist, besitzt auf seiner rechten Seite eine flügelförmige Verlängerung 7. Durch diese flügelförmige Verlängerung 7 wird verhindert, dass sich das Reifenmodul auf einer seiner Seiten auf der Reifeninnenseite abrollen kann. Die flügelförmige Verlängerung würde einen solchen Abrollgang stoppen und dafür sorgen, dass das Reifenmodul in die dargestellte stabile Lage auf der Reifeninnenseite 2 zurückfällt. In der Fig. 1 ist ebenfalls ein weiteres Ausführungsbeispiel dargestellt, bei dem der Container 6 auf der gegenüberliegenden Seite eine zweite flügelförmige Verlängerung 8 aufweist. Die zweite flügelförmige Verlängerung 8 unterstützt den Vorgang, bei dem sich das Reifenmodul optimal auf der Reifeninnenseite 2 ausrichtet. Auf der Oberseite des Reifenmoduls 3 ist eine bügelförmige Verlängerung 9 angeordnet, die ebenfalls ein Abrollen des Reifenmoduls auf der Reifeninnenseite unterbindet. Bei einem weiteren Ausführungsbeispiel würde die bügelförmige Verlängerung 14 kuppelförmig ausgebildet sein.

Die Fig. 2 zeigt das Reifenmodul 3 in einer Aufsicht. Es ist die stabile Lage des Reifenmoduls auf der Reifeninnenseite dargestellt. Das Reifenmodul 3 hat sich auf der Reifeninnenseite so in seiner stabilen Lage angeordnet, dass die kurze Querachse 12 in Umfangsrichtung 13 des Fahrzeugreifens zeigt. Gleichzeitig ist die lange Längsachse 11 des Reifenmoduls 3 im wesentlichen senkrecht zur Umfangsrichtung 13 ausgerichtet. Durch diese Ausrichtung des Reifenmoduls zeigt die Antenne 10, die parallel zur kurzen Querachse 12 des Reifenmoduls angeordnet ist, in Umfangsrichtung 13 des Fahrzeugreifens. Durch diese Ausrichtung der Antenne 10 wird eine optimale Signalübertragung des Reifenmoduls zu einem externen Empfangsgerät gewährleistet. Die flügelförmige Verlängerung des Containers 6 ist in der Aufsicht im wesentlichen elliptisch ausgebildet. Die flügelförmige Verlängerung 7 trägt im Wesentlichen dazu bei, dass sich das Reifenmodul in der dargestellten Ausrichtung auf der Reifeninnenseite anlegt.

### Bezugszeichenliste

### (ist Teil der Beschreibung)

- 1: Unterseite des Containers
- 2: Reifeninnenseite
- 3: Reifenmodul
- 4: Elektronikmodul mit einem Reifendruckmesssystem
- 5: Abgerundete Randbereiche des Containers
- 6: Container aus Elastomer-Material
- 7: Erste flügelförmige Verlängerung des Containers
- 8: Zweite flügelförmige Verlängerung des Containers
- 9: Bügelförmige Verlängerung auf der Oberseite des Reifenmoduls
- 10: Antenne im Elektronikmodul
- 11: Lange Längsachse des Reifenmoduls
- 12: Kurze Querachse des Reifenmoduls
- 13: Umfangsrichtung des Fahrzeugreifens
- 14: Alternative kuppelförmige Verlängerung
- 15: Höhenabmessung

## Patentansprüche

1. Reifenmodul (3) für Fahrzeugreifen mit einem Laufstreifen, Seitenwänden und einer Reifeninnenseite (2),
wobei das Reifenmodul (3) einen Container (6) zur Aufnahme und zum Schutz eines Elektronikmoduls (6) aufweist,
wobei das separate Elektronikmodul (6) eine Vielzahl von integrierten elektronischen Bauteilen umfasst,
wobei das Reifenmodul (3) frei beweglich im Reifenhohlraum des Fahrzeugreifens angeordnet ist und im Normalzustand an der Reifeninnenseite (2) anliegt,
wobei der Container (6) eine Unterseite (1) als Aufstandsfläche zur Reifeninnenseite (2)aufweist und diese Unterseite (1) in einer stabilen Lage des Reifenmoduls (3) sowie bei einer Bewegung des Fahrzeugreifens fest an einer Position an der Reifeninnenseite (2) anliegt,
*wobei der Container (6) eine kurze Querachse (12) und eine lange Längsache (11) mit mindestens einer flügelförmigen Verlängerung (7, 8) aufweist;*
*wobei das Reifenmodul (3) sich in einer stabilen Lage mit seiner kurzen Querachse (12) in Umfangsrichtung (13) des Fahrzeugreifens und mit seiner langen Längsachse senkrecht zur Umtangsrichtung des Fahrzeugreifens auf der Reifeninnenseite (2) ausrichtet,*
***dadurch gekennzeichnet, dass***
*die Antenne (10) im Reifenmodul (3) im Wesentlichen senkrecht zur langen Längsachse (11) ausgerichtet ist und in Umfangsrichtung (13) zum Fahrzeugreifen zeigt.*

2. Reifenmodul nach Anspruch 1,
**dadurch gekennzeichnet, dass**
die lange Längsachse (11) mindestens doppelt so lang ist wie die kurze Querachse (12).

3. Reifenmodul nach einem der vorhergehenden Ansprüche,
**dadurch gekennzeichnet, dass**
die lange Längsachse (11) eine Länge im Bereich zwischen 5 und 9 cm aufweist.

4. Reifenmodul nach einem der vorhergehenden Ansprüche,
**dadurch gekennzeichnet, dass**
der Container (6) eine lange Längsache (11) mit zwei gegenüberliegenden flügelförmigen Verlängerungen (7, 8) aufweist.

5. Reifenmodul nach einem der vorhergehenden Ansprüche,
**dadurch gekennzeichnet, dass**
das Reifenmodul (3) auf seiner Oberseite eine bügelförmige Verlängerung (9, 14) aufweist.

6. Reifenmodul nach einem der vorhergehenden Ansprüche,
**dadurch gekennzeichnet, dass**
die bügelförmige Verlängerung (9, 14) auf der Oberseite des Reifenmoduls senkrecht zur langen Längsachse (11) ausgerichtet ist.

7. Reifenmodul nach einem der vorhergehenden Ansprüche,
**dadurch gekennzeichnet, dass**
das die Höhenabmessung (15) der bügelförmigen Verlängerung (9, 13) ca. 1 bis 3 cm beträgt.

8. Reifenmodul nach einem der vorhergehenden Ansprüche,
**dadurch gekennzeichnet, dass**
die Randbereiche (5) des Containers (6) und/oder der flügelförmigen Verlängerung (7, 8) des Containers (6) abgerundete Formen aufweisen.

9. Reifenmodul nach einem der vorhergehenden Ansprüche,
**dadurch gekennzeichnet, dass**
die Unterseite des Containers (6) eine im Wesentlichen ebene Aufstandsfläche bildet.

10. Reifenmodul nach einem der vorhergehenden Ansprüche,
**dadurch gekennzeichnet, dass**
der Container (6) aus einem flexiblen Material besteht, wodurch das Elektronikmodul (4) einfach in den Container (6) montiert werden kann.

11. Reifenmodul nach einem der vorhergehenden Ansprüche,
**dadurch gekennzeichnet, dass**
der Container (6) aus einem weichen Material besteht, wobei die Materialhärte des Containermaterials kleiner oder in etwa gleich so groß ist wie die Materialhärte der Materiallagen von Reifeninnenseiten (2).

12. Reifenmodul nach einem der vorhergehenden Ansprüche,
**dadurch gekennzeichnet, dass**
der Container (6) aus einem Elastomer- oder einem Silikon-Material besteht.

## Claims

1. Tyre module (3) for vehicle tyres with a tread, sidewalls and a tyre inner side (2),
the tyre module (3) having a container (6) for receiving and protecting an electronics module (6), the separate electronics module (6) comprising a multiplicity of integrated electronic components,
the tyre module (3) being arranged freely movably in the tyre cavity of the vehicle tyre and in the normal state lying against the tyre inner side (2), the container (6) having an underside (1) as a standing area in relation to the tyre inner side (2) and this underside (1) lying fixed in a position against the tyre inner side (2) in a stable position of the tyre module (3) and when there is movement of the vehicle tyre,
the container (6) having a short transverse axis (12) and a long longitudinal axis (11) with at least one wing-shaped extension (7, 8),
the tyre module (3) in a stable position aligning itself with its short transverse axis (12) in the circumferential direction (13) of the vehicle tyre and with its long longitudinal axis perpendicularly to the circumferential direction of the vehicle tyre on the tyre inner side (2),
**characterized in that**
the antenna (10) in the tyre module (3) is aligned substantially perpendicularly to the long longitudinal axis (11) and points in the circumferential direction (13) in relation to the vehicle tyre.

2. Tyre module according to Claim 1,
**characterized in that**
the long longitudinal axis (11) is at least twice as long as the short transverse axis (12).

3. Tyre module according to one of the preceding claims,
**characterized in that**
the long longitudinal axis (11) has a length in the range between 5 and 9 cm.

4. Tyre module according to one of the preceding claims,
**characterized in that**
the container (6) has a long longitudinal axis (11) with two opposite wing-shaped extensions (7, 8).

5. Tyre module according to one of the preceding claims,
**characterized in that**
the tyre module (3) has on its upper side a bow-shaped extension (9, 14).

6. Tyre module according to one of the preceding claims,
**characterized in that**
the bow-shaped extension (9, 14) on the upper side of the tyre module is aligned perpendicularly to the long longitudinal axis (11).

7. Tyre module according to one of the preceding claims,
**characterized in that**
the height dimension (15) of the bow-shaped extension (9, 13) is about 1 to 3 cm.

8. Tyre module according to one of the preceding claims,
**characterized in that**
the peripheral regions (5) of the container (6) and/or of the wing-shaped extension (7, 8) of the container (6) have rounded forms.

9. Tyre module according to one of the preceding claims,
**characterized in that**
the underside of the container (6) forms a substantially planar standing area.

10. Tyre module according to one of the preceding claims,
**characterized in that**
the container (6) consists of a flexible material, as a result of which the electronics module (4) can be easily fitted into the container (6).

11. Tyre module according to one of the preceding claims,
**characterized in that**
the container (6) consists of a soft material, the material hardness of the container material being less than or approximately equal to the material hardness of the material layers of tyre inner sides (2).

12. Tyre module according to one of the preceding claims,
**characterized in that**
the container (6) consists of an elastomer material or a silicone material.

## Revendications

1. Module de pneu (3) pour pneu de véhicule, comprenant une bande de roulement, des parois latérales et un côté intérieur de pneu (2),
le module de pneu (3) présentant un contenant (6) pour recevoir et protéger un module électronique (6),
le module électronique séparé (6) comprenant une pluralité de composants électroniques intégrés,
le module de pneu (3) étant disposé de manière librement déplaçable dans la cavité du pneu du véhicule et, dans l'état normal, s'appliquant contre le côté intérieur du pneu (2),
le contenant (6) présentant un côté inférieur (1) en tant que surface d'appui par rapport au côté intérieur du pneu (2) et ce côté inférieur (1), dans une position stable du module de pneu (3), ainsi que lors d'un déplacement du pneu de véhicule, s'appliquant fixement en une position contre le côté intérieur du pneu (2),
le contenant (6) présentant un axe transversal court (12) et un axe longitudinal long (11) avec au moins un prolongement en forme d'aile (7, 8),
le module de pneu (3) s'orientant dans une position stable avec son axe transversal court (12) dans la direction périphérique (13) du pneu du véhicule et avec son axe longitudinal long perpendiculairement à la direction périphérique du pneu de véhicule vers le côté intérieur du pneu (2),
**caractérisé en ce que**
l'antenne (10) dans le module de pneu (3) est orientée essentiellement perpendiculairement à l'axe longitudinal long (11) et est orientée vers le pneu du véhicule dans la direction périphérique (13).

2. Module de pneu selon la revendication 1,
**caractérisé en ce que**
l'axe longitudinal long (11) est au moins deux fois plus long que l'axe transversal court (12).

3. Module de pneu selon l'une quelconque des revendications précédentes,
**caractérisé en ce que**
l'axe longitudinal long (11) présente une longueur comprise dans une plage entre 5 et 9 cm.

4. Module de pneu selon l'une quelconque des revendications précédentes,
**caractérisé en ce que**
le contenant (6) présente un axe longitudinal long (11) avec deux prolongements opposés (7, 8) en forme d'aile.

5. Module de pneu selon l'une quelconque des revendications précédentes,
**caractérisé en ce que**
le module de pneu (3) présente sur son côté supérieur un prolongement en forme d'étrier (9, 14).

6. Module de pneu selon l'une quelconque des revendications précédentes,
**caractérisé en ce que**
le prolongement en forme d'étrier (9, 14) est orienté vers le côté supérieur du module de pneu perpendiculairement à l'axe longitudinal long (11).

7. Module de pneu selon l'une quelconque des revendications précédentes,
**caractérisé en ce que**
la dimension en hauteur (15) du prolongement en forme d'étrier (9, 13) mesure environ 1 à 3 cm.

8. Module de pneu selon l'une quelconque des revendications précédentes,
**caractérisé en ce que**
les régions de bord (5) du contenant (6) et/ou du prolongement en forme d'aile (7, 8) du contenant (6) présentent des formes arrondies.

9. Module de pneu selon l'une quelconque des revendications précédentes,
**caractérisé en ce que**
le côté inférieur du contenant (6) forme une surface d'appui essentiellement plane.

10. Module de pneu selon l'une quelconque des revendications précédentes,
**caractérisé en ce que**
le contenant (6) se compose d'un matériau flexible de sorte que le module électronique (4) puisse être monté facilement dans le contenant (6).

11. Module de pneu selon l'une quelconque des revendications précédentes,
**caractérisé en ce que**
le contenant (6) se compose d'un matériau souple, la dureté du matériau du contenant étant inférieure ou approximativement identique à la dureté du matériau des couches de matériau des côtés intérieurs du pneu (2).

12. Module de pneu selon l'une quelconque des revendications précédentes,
**caractérisé en ce que**
le contenant (6) se compose d'un matériau élastomère ou d'un matériau à base de silicone.
